(19) **Europäisches Patentamt / European Patent Office / Office européen des brevets**

(11) **EP 3 974 862 A1**

(12) # EUROPEAN PATENT APPLICATION
published in accordance with Art. 153(4) EPC

(43) Date of publication:
**30.03.2022 Bulletin 2022/13**

(21) Application number: **19931222.4**

(22) Date of filing: **30.05.2019**

(51) International Patent Classification (IPC):
***G01S 7/481*** (2006.01)

(52) Cooperative Patent Classification (CPC):
**G01S 7/481**

(86) International application number:
**PCT/CN2019/089364**

(87) International publication number:
**WO 2020/237590 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Wusha, Chang'an**
**Dongguan**
**Guangdong 523860 (CN)**

(72) Inventor: **WANG, Lu**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **CAMERA MODULE, CONTROL METHOD, COMPUTER STORAGE MEDIUM AND ELECTRONIC DEVICE**

(57)    Provided are a camera module, a control method, a computer storage medium, and an electronic device. The camera module includes protective glass, a light-emitting component, and a light-receiving component. The protective glass is configured to shield and protect the light-emitting component and the light-receiving component. The protective glass includes a glass substrate and a glass groove. The glass groove is made on a glass surface of the glass substrate.

FIG. 8

EP 3 974 862 A1

## Description

### FIELD

Embodiments of the present disclosure relate to the field of sensor technologies, and more particularly, to a camera module, a control method, a computer storage medium, and an electronic device.

### BACKGROUND

With the rapid development of electronic devices, people are no longer satisfied with the two-dimensional imaging function, but instead, gradually turn to the pursuit of the three-dimensional imaging function. The existing three-dimensional (3D) imaging technology is mainly Time of Flight (TOF) technology. The principle of a TOF sensor is that modulated near-infrared light emitted by a light-emitting component is reflected when it encounters an object to be photographed, and a light-receiving component calculates a time difference or phase difference between light emission and reflection to obtain a distance to the object to be photographed and generate depth information.

In practical applications, the TOF sensor will be shielded with protective glass. Since a light transmittance of the protective glass is generally about 90%, an internal reflection may occur inside the protective glass, especially the near-infrared light near the light-receiving component side may enter a light-receiving component after multiple reflections inside the protective glass. This part of the reflected light, when entering the light-receiving component, will interfere with depth information generated by returning of normal signal. In order to solve this technical problem, the existing solutions include that the protective glass is designed to have a split structure, which, however, reduces quality of the appearance and requires complicated fixation of the structure with high cost; or a distance between the light-emitting component and the light-receiving component is increased, but such a design is limited by the space of an electronic device and increases an area of the protective glass, thereby affecting the appearance of the electronic device.

### SUMMARY

Embodiments of the present disclosure provide a camera module, a control method, a computer storage medium, and an electronic device, capable of maintaining a one-piece structure of protective glass, which ensures the integrity of an appearance, simplify structure fixation, and facilitates assembly; also capable of shortening a distance between a light-emitting component and a light-receiving component as much as possible, which saves more arrangement space for the electronic device; and also capable of preventing reflected light of marginal laser inside the protective glass from entering the light-receiving component, which eliminates interference.

Technical solutions of the embodiments of the present disclosure can be implemented as follows.

In a first aspect, an embodiment of the present disclosure provides a camera module. The camera module includes protective glass, a light-emitting component, and a light-receiving component. The protective glass is configured to shield and protect the light-emitting component and the light-receiving component. The protective glass includes a glass substrate and a glass groove. The glass groove is made on a glass surface of the glass substrate.

In a second aspect, an embodiment of the present disclosure provides a control method. The method is applied in a camera module. The method includes: receiving a laser emitting instruction for indicating a light-emitting component to emit a laser signal; refracting the laser signal by a glass substrate, performing N reflections of the laser signal inside the glass substrate by the glass substrate, and transmitting, by the glass substrate, a first reflected light signal formed after an N-th reflection to a glass groove, wherein N is greater a positive integer greater than or equal to 1, and the glass groove is made on a glass surface of the glass substrate; and performing, by the glass groove, an (N+1)-th reflection of the first reflected light signal to control the first reflected light signal not to enter a light-receiving component, wherein a direction of a path along which the first reflected light signal propagates after the (N+1)-th reflection is opposite to a direction of a path along which the first reflected light signal propagates after the N-th reflection.

In a third aspect, an embodiment of the present disclosure provides a computer storage medium. The computer storage medium stores a control program. The control program, when executed by a camera module, implements steps of the method as described in the second aspect.

In a fourth aspect, an embodiment of the present disclosure provides an electronic device. The electronic device at least includes the camera module as described in the first aspect.

The embodiments of the present disclosure provide a camera module, a control method, a computer storage medium, and an electronic device. The camera module includes protective glass, a light-emitting component, and a light-receiving component. The protective glass is configured to shield and protect the light-emitting component and the light-receiving component. The protective glass includes a glass substrate and a glass groove. The glass groove is made on a glass surface of the glass substrate. In this way, one whole piece of protective glass is used as a substrate, and the glass groove is defined on the glass surface by heat melting or etching, which not only maintains the one-piece structure of the protective glass, but also ensures the integrity of the appearance, thereby simplifying the structure fixation and facilitating assembly. Meanwhile, the processing of the glass is simple and the cost is low. In addition, the distance between the light-emitting component and the light-receiving component can be shortened as much as possible, thereby saving more arrangement space for the electronic device. Also, the glass groove can prevent the marginal laser reflected inside the protective glass from entering the light-receiving component, thereby eliminating the interference.

**BRIEF DESCRIPTION OF DRAWINGS**

FIG. 1 is a schematic diagram illustrating a working principle of a Direct-TOF (D-TOF) scheme provided by a solution in the related art.
FIG. 2 is a schematic diagram illustrating a working principle of a continuous wave modulation scheme in Indirect-TOF (I-TOF) provided by a solution in the related art.
FIG. 3 is a schematic diagram illustrating a composition structure of a conventional camera module provided by a solution in the related art.
FIG. 4 is a schematic diagram illustrating a principle of multiple reflections of laser in glass provided by a solution in the related art.
FIG. 5A is a depth information map without interference provided by a solution in the related art.
FIG. 5B is a depth information map with interference provided by a solution in the related art.
FIG. 6 is a schematic diagram illustrating a composition structure of another conventional camera module provided by a solution in the related art.
FIG. 7 is a schematic diagram illustrating a composition structure of yet another conventional camera module provided by a solution in the related art.
FIG. 8 is a schematic diagram illustrating a composition structure of a camera module according to an embodiment of the present disclosure.
FIG. 9 is a schematic diagram illustrating a composition structure of another camera module according to an embodiment of the present disclosure.
FIG. 10 is a schematic diagram illustrating a calculation principle of an angle of an inclined surface of a glass groove according to an embodiment of the present disclosure.
FIG. 11 is a schematic diagram illustrating a composition structure of yet another camera module provided by a solution in the related art.
FIG. 12 is a schematic diagram illustrating a composition structure of still yet another camera module provided by a solution in the related art.
FIG. 13 is a flowchart illustrating a control method according to an embodiment of the present disclosure.
FIG. 14 is a block diagram illustrating a composition structure of an electronic device according to an embodiment of the present disclosure.

**DESCRIPTION OF EMBODIMENTS**

In order to explain features and technical content of embodiments of the present disclosure in detail, implementations of the embodiments of the present disclosure will be described in detail below with reference to the accompanying drawings. The accompanying drawings are merely for reference and explanation purposes, and they shall not be used to limit the embodiments of the present disclosure.

In recent years, people's research on optics is gradually deepening with the rapid development of TOF technology. TOF, as a Three-Dimensional (3D) imaging technology, is widely used in electronic devices such as smart phones, handheld computers, tablet computers, digital cameras, etc., and TOF can be applied in, for example, distance measurement, 3D modeling, photo blurring and somatosensory games, and can also realize applications involving Augmented Reality (AR) glasses in combination with AR technology.

Generally speaking, a TOF sensor may include a light-emitting component and a light-receiving component. The light-emitting component can also be referred to as a laser transmitter, an infrared light-emitting source or a TOF-emitting module, and the light-receiving component can also be referred to as an infrared light receiver, a detector, or a TOF-receiving module. Specifically, the light-emitting component emits modulated near-infrared light, which is reflected after encountering an object to be photographed, and the light-receiving component calculates a time difference or phase difference between light emission and reflection to obtain a distance to the object to be photographed and generate depth information.

It is to be understood that TOF can be classified into D-TOF and I-TOF depending upon different signal results obtained. Here, the D-TOF obtains a time difference, and the I-TOF obtains a phase shift (e.g., a proportion of charge or voltage in different phases), so as to calculate the distance to the object to be photographed, thereby generating the depth information.

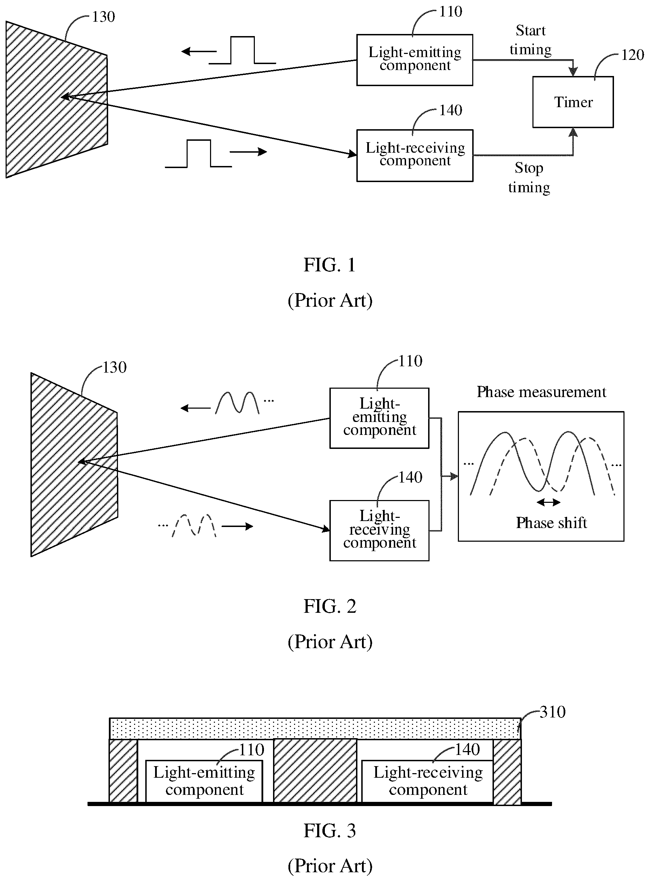

FIG. 1 is a schematic diagram illustrating a working principle of a D-TOF scheme provided by a solution in the related art. In FIG. 1, a light-emitting component 110 emits a square wave pulse signal, and a timer 120 starts timing; the square wave pulse signal encounters and is reflected by a 3D surface of an object 130 to be photographed, the reflected square wave pulse signal can be received by a light-receiving component 140; at the time when the light-receiving component 140 receives the reflected square wave pulse signal, the timer 120 stops timing. In this way, a distance can be calculated based on a time difference of the timer 120.

According to modulation methods, the I-TOF can be classified into a pulsed modulation scheme and a continuous wave modulation scheme. The electronic devices manufactured by most manufacturers adopt the continuous wave modulation scheme, as illustrated in FIG. 2, which is a schematic diagram illustrating a working principle of a continuous wave modulation scheme in I-TOF provided by a solution in the related art. Here, continuous wave modulation usually adopts sine wave modulation. Since a phase shift between a sine wave emitted by the light-emitting component and a sine wave received by the light-receiving component is proportional to the distance to the object to be photographed, the phase shift can be used to calculate the distance. In FIG. 2, the light-emitting component 110 emits a sine wave signal, assuming that a frequency of the sine wave signal is 20MHz; the sine wave signal encounters and is reflected by the 3D surface of the object 130 to be photographed, and the reflected sine wave signal can be received by the light-receiving component 140. The phase shift between the sine wave signal emitted by the light-emitting component 110 and the reflected sine wave signal received by the light-receiving component 140 can be detected through phase measurement, and thus the distance can be calculated based on the phase shift.

In practical applications, the TOF sensor and the camera are usually designed as one piece, and thus an external part can be shielded with protective glass to protect the TOF sensor and the camera. Here, a thickness of the protective glass can be set based on actual situations, which is not specified in the embodiments of the present disclosure. FIG. 3 is a schematic diagram illustrating a composition structure of a conventional camera module provided by a solution in the related art. Referring to FIG. 3, the conventional camera module may include a light-emitting component 110, a light-receiving component 140, and first glass 310. The first glass 310, as the protective glass, has a one-piece structure and can shield both the light-emitting component 110 and the light-receiving component 140. Since a light transmittance of the protective glass is generally around 90%, when the light-emitting component emits laser, most of the signal in the laser will pass through the protective glass, hit the surface of the object to be photographed, and reflected back to the light-receiving component. In the meantime, a small part of the signal of the laser (especially when the emitted laser is marginal laser and is close to the light-receiving component side) will be reflected multiple times inside the protective glass and then enter the light-receiving component. This small part of the reflected light, as a non-useful signal, may enter the light-receiving component and interfere with the depth information generated by the returning of the normal signal. Such a phenomenon is referred to as interference.

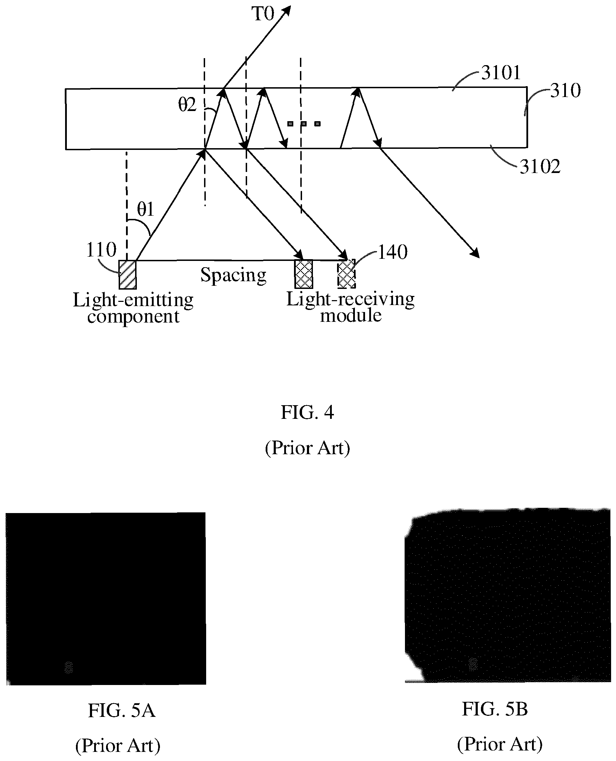

FIG. 4 is a schematic diagram illustrating a principle of multiple reflections of laser in glass provided by a solution in the related art. As illustrated in FIG. 4, the first glass 310 may include an upper glass surface 3101 and a lower glass surface 3102. An emission angle of the laser signal is represented by θ1, and a refraction angle of the laser after entering the first glass 310 is represented by θ2. A distance (indicated by spacing or DB) between the light-emitting component 110 and the light-receiving component 140 may affect the number of reflections of the laser inside the first glass 310. Assuming that the number of reflections is represented by N, the greater the spacing, the greater the value of N. After the laser (especially the marginal laser) emitted by the light-emitting component 110 is refracted inside the first glass 310 via the lower glass surface 3102, most (for example, more than 90%) of the laser signal will be directly emitted to outside via the upper glass surface 3101 (as indicated by T0), and a small part (for example, less than 10%) of the laser signal will be transmitted to the lower glass surface 3102 inside the first glass 310 through the 1-st reflection on the upper glass surface 3101, subjected to the 2-nd reflection on the lower glass surface 3102, and then transmitted to the upper glass surface 3101 again. In this way, due to the multiple reflections and transmission via the upper glass surface 3101 and the lower glass surface 3102, this small part of the laser signal may enter the light-receiving component 140 during the multiple reflections. Only when a signal is transmitted to an edge position of the first glass 310 or energy of the signal is attenuated to 0 (approximately 0), the reflection of the laser signal inside the first glass 310 ends.

In applications of TOF, depending upon the emission angle and receiving angle of the laser, and the distance between the light-emitting component and the light-receiving component, the laser emitted by the light-emitting component can generally enter the light-receiving component after 3 to 4 times of reflection inside the protective glass.

It should be noted that, the presence or absence of the interference phenomenon may be determined by comparing reflected energy entering the light-receiving component with emitted light energy per unit area. Specifically, if the reflected energy entering the light-receiving component is smaller than the emitted light energy per unit area, it can be determined that no interference is present in this circumstance, as illustrated in FIG. 5A, illustrating a depth information map without interference provided by a solution in the related art. In view of FIG. 5A, the content of the depth information is relatively complete. If the reflected energy entering the light-receiving component is greater than or equal to the emitted light energy per unit area, it can be determined that the interference is present in this circumstance, as illustrated in FIG. 5B, illustrating a depth information map with interference provided by a solution in the related art. FIG. 5B illustrates a situation of severe interference, in which the content of the depth information is incomplete, and especially, the depth information on the left is missing, for a reason that the interference of the marginal laser has a serious impact on the depth information on the left side of the captured image. In this case, the distance between the light-emitting component and the light-receiving component can be increased to weaken influence caused by the interference.

For example, assuming that the energy of the laser emitted by the light-emitting component is about $1 \times 10^{-8}$ mW after three times of reflection and the emitted light energy per unit area is about $1.2 \times 10^{-8}$ mW, as the energy after three times of reflection is smaller than the emitted light energy per unit area, the distance between the light-emitting component and the light-receiving component is longer than a path along which the light after three times of reflection propagates, and thus the interference is absent or very weak. Assuming that the energy after three times of reflection is about $1.3 \times 10^{-8}$ mW and the emitted light energy per unit area is about $1.2 \times 10^{-8}$ mW, as the energy after three times of reflection is greater than the emitted light energy per unit area, the interference is present. In order to reduce the impact of the interference, the distance between the light-emitting component and the light-receiving component can be increased. For example, the distance between the light-emitting component and the light-receiving component is longer than the path along which the light after three times of reflection propagates.

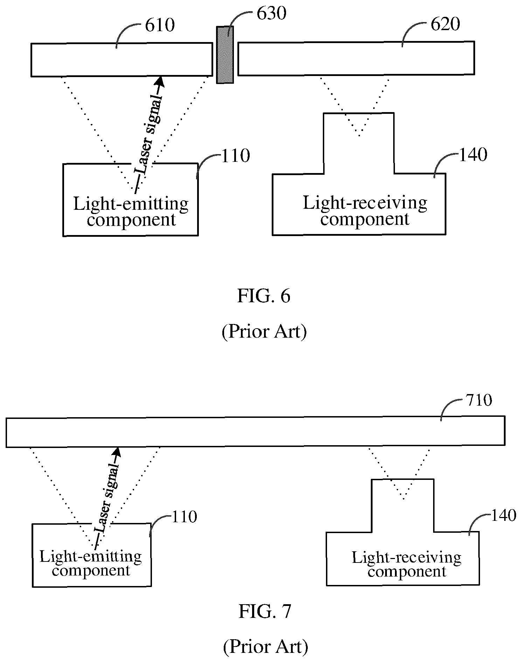

In order to solve the problem of interference, one of the existing solutions can design the protective glass as a split structure. Specifically, the protective glass is made into a partition structure. That is, two pieces of protective glasses are used, one for shielding the light-emitting component and the other for shielding the light-receiving component. FIG. 6 is a schematic diagram illustrating a composition structure of another conventional camera module provided by a solution in the related art. As illustrated in FIG. 6, second glass 610 and third glass 620 are separated by a partition 630. Here, the second glass 610 and the third glass 620 can also be used as the protective glass. The light-emitting component 110 is shielded by the second glass 610, and the light-receiving component 140 is shielded by the third glass 620. This solution can minimize the distance between the light-emitting component and the light-receiving component, and it can reduce the space occupied in the electronic device and completely shield reflections inside the protective glass of the marginal laser. However, since the protective glass is designed as the split structure, quality of an appearance is deteriorated. Moreover, due to the one additional piece of protective glass, requirements on cost and assembly are high, and the structure fixation is highly complicated.

In addition, one of the existing solutions can increase the distance between the light-emitting component and the light-receiving component, so as to reduce the influence of the interference through increasing the number of reflections. Specifically, one whole piece of protective glass is used to shield the light-emitting component and the light-receiving component. FIG. 7 is a schematic diagram illustrating a composition structure of yet another conventional camera module provided by a solution in the related art. As illustrated in FIG. 7, fourth glass 710 serves as the protective glass to shield both the light-emitting component 110 and the light-receiving component 140. Although this solution has a cost advantage and is simpler in terms of assembly, it requires more arrangement space in the electronic device due to the increased distance between the light-emitting component and the light-receiving component. In addition, the appearance is deteriorated to a certain extent due to an increase in an area of the protective glass. Also, the interference caused by the marginal laser reflected inside the protective glass cannot be completely eliminated.

The embodiments of the present disclosure provide a camera module, which is still applied in the TOF. The camera module not only maintains the one-piece structure of the protective glass, but also ensures the integrity of the appearance, thereby simplifying the structure fixation and facilitating assembly. In addition, the distance between the light-emitting component and the light-receiving component can be reduced as much as possible, thereby saving more arrangement space in the electronic device. In the meantime, the marginal laser reflected inside the protective glass can be prevented from entering the light-receiving component, thereby eliminating the interference.

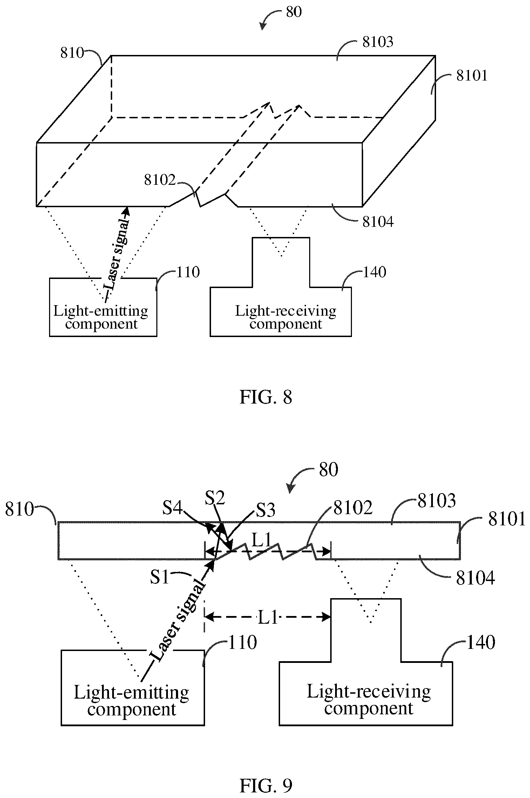

FIG. 8 is a schematic diagram illustrating a composition structure of a camera module according to an embodiment of the present disclosure. As illustrated in FIG. 8, a camera module 80 may include protective glass 810, a light-emitting component 110, and a light-receiving component 140. The protective glass 810 may be configured to shield and protect the light-emitting component 110 and the light-receiving component 140. The protective glass 810 may include a glass substrate 8101 and a glass groove 8102. The glass groove 8102 is made on a glass surface of the glass substrate 8101.

In some embodiments, the glass substrate 8101 is configured to refract a laser signal emitted by the light-emitting component 110, perform N reflections of the laser signal inside the glass substrate 8101, and transmit a first reflected light signal formed after an N-th reflection to the glass groove 8102. N is a positive integer greater than or equal to 1.

The glass groove 8102 is configured to perform an (N+1)-th reflection of the first reflected light signal to control the first reflected light signal not to enter the light-receiving component 140. A direction of a path along which the first reflected light signal propagates after the (N+1)-th reflection is opposite to a direction of a path along which the first reflected light signal propagates after the N-th reflection.

It should be noted that the laser signal emitted by the light-emitting component 110 generally refers to an infrared light signal or a modulated near-infrared light signal, which is not specifically limited in the embodiments of the present disclosure. In addition, the number of reflections N has a value correlating with the emission angle of the laser signal, a refractive index of air, and a refractive index of glass. In practical applications, when the laser signal is emitted at the maximum emission angle, N is usually equal to 1, which is not specifically limited in the embodiments of the present disclosure.

It should also be noted that the camera module 80 is applied in the TOF. The light-emitting component 110 is configured to emit the laser signal. The laser signal enters the glass substrate 8101 through the refraction on the lower glass surface and is reflected N times inside the glass substrate 8101. The first reflected light signal formed after the N-th reflection is transmitted to the glass groove 8102, and the glass groove 8102 performs the (N+1)-th reflection of the first reflected light signal to control the first reflected light signal not to enter the light-receiving component 140. In this way, the light reflected inside the protective glass of the laser (especially the marginal laser) emitted by the light-emitting component is prevented from entering the light-receiving component, thereby eliminating the interference.

In some embodiments, based on the camera module 80 illustrated in FIG. 8, the glass surface includes an upper glass surface 8103 and a lower glass surface 8104.

The glass substrate 8101 is specifically configured to: refract the laser signal via the lower glass surface 8104 to form refracted light, perform the N reflections of the refracted light via the upper glass surface 8103 and the lower glass surface 8104, and transmit the first reflected light signal formed after the N-th reflection to the glass groove 8102.

It should be noted that, in FIG. 8, an upper surface of the glass substrate is referred to as the upper glass surface 8103, and a lower surface of the glass substrate is referred to as the lower glass surface 8104. When the light-emitting component 110 emits the laser signal, the laser signal is refracted via the lower glass surface 8104 to generate the refracted light. When the refracted light is transmitted to the upper glass surface 8103, the 1-st reflection of the refracted light can be performed via the upper glass surface 8103 to transmit the refracted light to the lower glass surface 8104. Then, the 2-nd reflection of the refracted light can be performed via the lower glass surface 8104 to transmit the refracted light to the upper glass surface 8103. In this way, the refracted light can be reflected N times via the upper glass surface 8103 and the lower glass surface 8104, and the first reflected light signal formed after the N-th reflection can be transmitted to the glass groove 8102.

Thus, the (N+1)-th reflection can be performed via the glass groove 8102, and the direction of the path along which the first reflected light signal propagates after the (N+1)-th reflection is opposite to the direction of the path along which the first reflected light signal propagates after the N-th reflection. For example, in combination with the camera module 80 illustrated in FIG. 8, after the light-emitting component 110 emits the laser signal, through the N reflections of the laser signal, the laser signal propagates along a path approaching the light-receiving component 140, i.e., an original path along which the reflected light signal propagates in current solutions. In order to avoid the interference caused by the reflected light signal entering the light-receiving component 140, in the embodiments of the present disclosure, the glass groove 8102 performs the (N+1)-th reflection, and after the (N+1)-th reflection, the reflected light signal propagates along a path approaching the light-emitting component 110 (i.e., in a direction opposite to the direction approaching the light-receiving component 140). That is, after the (N+1)-th reflection, the reflected light signal is no longer transmitted along the original path, such that the reflected light signal will not enter the light-receiving component 140, thereby eliminating the interference.

Further, in some embodiments, based on the camera module 80 illustrated in FIG. 8, the glass substrate 8101 is further configured to refract the refracted light via the upper glass surface 8103 to generate a transmission signal, and transmit the transmission signal to an external environment.

When a second reflected light signal is generated by the transmission signal encountering and being reflected by an object to be photographed in the external environment, the light-receiving component 140 is specifically configured to receive a second reflected light signal.

It should be noted that, after the light-emitting component 110 emits the laser signal, the laser signal is refracted into the glass substrate 8101 via the lower glass surface 8104. Due to a limitation of the light transmittance of the glass substrate 8101, most (for example, more than 90%) of the signal in the laser can be refracted via the upper glass surface 8103 to generate the transmission signal, which is transmitted to the external environment. In the meantime, a small part (for example, less than 10%) of the signal in the laser cannot be transmitted through the upper glass surface 8103, and thus the 1-st reflection may be performed via the upper glass surface 8103, the 2-nd reflection may be performed via the lower glass surface 8104, and so on. Through the N reflections inside the glass substrate 8101, the first reflected light signal formed after the N-th reflection may be transmitted to the glass groove 8102. The transmission signal transmitted to the external environment, when encountering the object to be photographed, may be reflected to generate the second reflected light signal. The second reflected light signal, as a useful signal, is allowed to enter the light-receiving component 140. In contrast, the first reflected light signal formed inside the glass substrate 8101 is a non-useful signal. In the embodiments of the present disclosure, the glass groove 8102 can prevent the first reflected light signal from entering the light-receiving component 140, thereby solving the problem of the interference caused by the first reflected light signal.

Further, in some embodiments, based on the camera module 80 illustrated in FIG. 8, referring to FIG. 9, the glass groove 8102 is defined on the lower glass surface 8104 corresponding to a non-effective region L1 of the glass substrate 8101. The non-effective region L1 is a region of the glass substrate located between the light-emitting component and the light-receiving component.

It should be noted that, when the glass groove 8102 is located in the non-effective region L1, energy loss of the laser signal can be avoided, and the first reflected light signal can also be effectively prevented from entering the light-receiving component 140. In addition, the glass groove 8102 can be defined on either the lower glass surface 8104 or the upper glass surface 8103. However, considering the aesthetics and integrity of the appearance, the glass groove 8102 is usually defined on the lower glass surface 8104. In the embodiments of the present disclosure, an example in which the glass groove is defined on the lower glass surface 8104 is described in detail.

It should also be noted that, in order to reduce a length of the glass substrate 8101 and thus reduce an area of the glass substrate 8101, it is also conceivable that when the laser signal is emitted at a maximum emission angle, the laser signal can be transmitted to the glass groove 8102 through one reflection inside the glass substrate 8101, i.e., N is equal to 1. Therefore, in some embodiments, based on the camera module 80 illustrated in FIG. 9, when the laser signal is emitted at the maximum emission angle, N is equal to 1.

The glass substrate 8101 is specifically configured to: refract the laser signal at the maximum emission angle, perform a 1-st reflection inside the glass substrate 8101, and transmit the first reflected light signal formed after the 1-st reflection to the glass groove 8102.

The glass groove 8102 is specifically configured to perform a 2-nd reflection on the first reflected light signal to control the first reflected light signal not to enter the light-receiving component.

It should be noted that the emission angle refers to an included angle between the emitted laser signal and a normal line. Since the glass groove 8102 is close to a left side of the light-emitting component 110, in response to the maximum emission angle, a first distance between the laser signal emitted by the light-emitting component 110 and the glass groove 8102 is the shortest. As the number of reflections increases, the signal loses more energy, and the first distance increases, and thus the area of the protective glass is increased. In this regard, N is set to be 1 in response to the maximum emission angle, in order to reduce the area of the protective glass as much as possible and eliminate the interference.

Illustratively, in conjunction with the camera module 80 illustrated in FIG. 9, after the light-emitting component 110 emits the laser signal, due to the relatively great emission angle of the laser signal, the laser belongs to the marginal laser signal (denoted by S1), as illustrated in FIG. 9. The marginal laser signal is refracted into the glass substrate 8101 via the lower glass surface 8104 to form refracted light (denoted by S2). The refracted light generates the first reflected light signal (denoted by S3) through the 1-st reflection on the upper glass surface 8103. The first reflected light signal is transmitted to the glass groove 8102. The first reflected light signal will undergo the 2-nd reflection on the glass groove 8102, and the reflected light signal after the 2-nd reflection is denoted by S4. A design angle of the glass groove 8102 may make the reflected light signal after the 2-nd reflection transmit in a direction opposite to that of the original path, i.e., transmitting towards the light-emitting component 110. Thus, the first reflected light signal will not enter the light-receiving component 140, thereby eliminating the interference.

Further, in some embodiments, based on the camera module 80 illustrated in FIG. 8, the glass groove 8102 is formed by hot melting or etching the glass substrate 8101.

It should be noted that, in the embodiments of the present disclosure, one whole piece of protective glass 810 is used as a substrate; the glass groove 8102 is formed by processing the lower glass surface 8104 corresponding to the non-effective region L1, in order to prevent the light signal reflected inside the protective glass of the marginal laser emitted by the light-emitting component 110 from entering the light-receiving component 140, thereby eliminating the interference. In the embodiments of the present disclosure, the glass groove 8102 can be processed by hot-melting or etching the glass substrate 8101; or other thermal processes can also be adopted, which are not specifically limited in the embodiments of the present disclosure.

Further, in some embodiments, based on the camera module 80 illustrated in FIG. 8, the glass groove 8102 includes at least one boss in a triangular shape.

The glass groove 8102 is specifically configured to perform the (N+1)-th reflection of the first reflected light signal via an inclined surface of the at least one boss to control the first reflected light signal not to enter the light-receiving component 140.

It should be noted that the glass groove 8102 may include one boss or a plurality of bosses. The number of bosses can be determined according to the actual situations, which is not specifically limited in the embodiments of the present disclosure. In addition, the boss generally has, but is not limited to, a shape of triangle. In this way, the (N+1)-th reflection of the first reflected light signal is performed via the inclined surface of the at least one boss, and a direction of a path along which the first reflected light signal propagates after the (N+1)-th reflection is opposite to a direction of the original path, such that the first reflected light signal will not enter the light-receiving component.

In order to make the direction of the path along which the first reflected light signal propagates after the (N+1)-th reflection to be opposite to the direction of the original path, an angle of the inclined surface of the boss shall be controlled. The angle of the inclined surface is related to the emission angle of the laser signal, the refractive index of air, and the refractive index of glass. Therefore, in some embodiments, a design angle corresponding to the inclined surface of the boss is determined based on the emission angle of the laser, the refractive index of air, and the refractive index of glass.

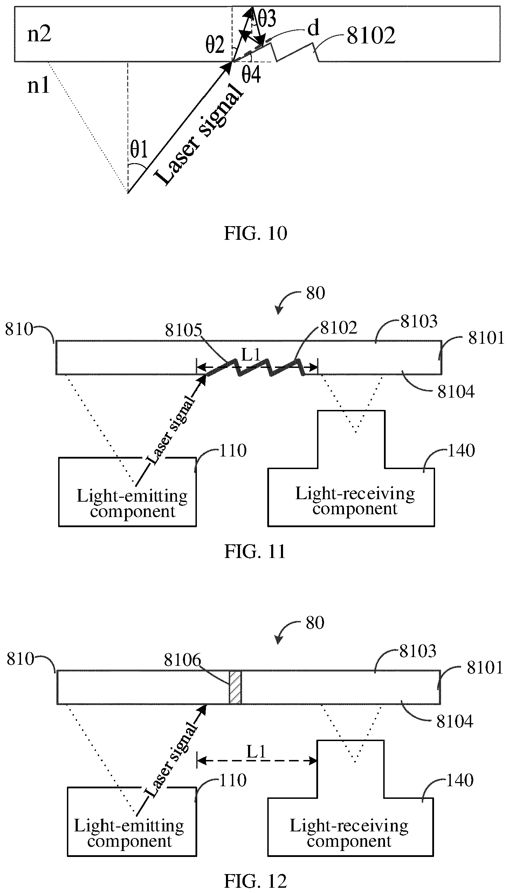

Reference is made to FIG. 10, which is a schematic diagram illustrating a calculation principle of an angle of an inclined surface of a glass groove according to an embodiment of the present disclosure. As illustrated in FIG. 10, the refractive index of air is represented by n1, the refractive index of glass is represented by n2, the emission angle of the laser signal is represented by θ1, a refraction angle of the laser signal inside the glass substrate is represented by θ2, a reflection angle of the 1-st reflection via the upper glass surface is represented by θ3, and the angle of the inclined surface of the glass groove (i.e., the design angle corresponding to the inclined surface of the boss) is represented by θ4. Accordingly, assuming that θ1 is 40°, n1 is equal to 1, and n2 is equal to 1.5, θ2 can be calculated in accordance with Equation (1),

$$\frac{\sin \theta 1}{\sin \theta 2} = \frac{n2}{n1} \tag{1}$$

Based on the calculation of Equation (1), the refraction angle θ2 is equal to 25.5°, and thus the reflection angle θ3 formed after the 1-st reflection via the upper glass surface is also equal to 25.5°. If it is desired that the path along which the light signal propagates after the 2-nd reflection is directed to an opposite direction, then θ4 can be calculated in conjunction with the reflection law. Meanwhile, in consideration of a processing error and other factors, a value of θ4 may range from 30° to 35° in the embodiments of the present disclosure. That is, a depth of the glass groove or a height of the boss shall be lower than a dashed line (indicated by d) illustrated in FIG. 10.

In the embodiments of the present disclosure, in addition to avoiding the interference caused by the reflected light signal transmitted to the light-receiving component by means of the glass groove 8102, most of the reflected light signal can be absorbed by a light-absorbing material. Therefore, in another embodiment of the present disclosure, based on the camera module 80 illustrated in FIG. 8, the protective glass 810 may further include a light-absorbing material 8105 coated on a surface of the glass groove 8102, as illustrated in FIG. 11.

It should be noted that the light-absorbing material 8105 can be a black material or other light-absorbing materials, and it is mainly configured to absorb light signal. In this way, one layer of light-absorbing material 8105 coated on the surface of the glass groove 8102 can not only absorb most of the first reflected light signal, but also avoid the interference caused by the first reflected light signal transmitted to the light-receiving component.

Further, in addition to avoiding the interference caused by the reflected light signal transmitted to the light-receiving component by means of the glass groove 8102, one layer of light shielding material can also be added inside the protective glass, which can also effectively prevent the reflected light signal from being transmitted to the light-receiving component. Therefore, in another embodiment of the present disclosure, based on the camera module 80 illustrated in FIG. 8, the protective glass 810 may further include a light shielding material 8106 located in the non-effective region of the glass substrate 8101, as illustrated in FIG. 12,.

Further, the light shielding material 8106 is added in the glass substrate through a thermal processing of the glass substrate 8101.

It should be noted that the light shielding material 8106 may be the same as or different from the light absorbing material 8105. The light shielding material 8106 mainly prevents light signal from entering the other side of the light shielding material. In addition, the light shielding material 8106 is added at a position in the non-effective region L1 of the glass substrate 8101, i.e., a region located between the light-emitting component and the light-receiving component, which can be set based on practical situations and is not specifically limited in the embodiments of the present disclosure. In this way, the light signal can be more effectively prevented from entering, through reflections inside the glass substrate, the light-receiving component side from the light-emitting component side. It should also be noted that the glass substrate 8101 of the protective glass may be an acrylic material, which belongs to a plastic polymer material. Therefore, the light shielding material 8106 can be added inside the glass substrate 8101 through the thermal processing of the glass substrate 8101. For example, the light shielding material 8106 can be added through a grinding tool in a process of a glass liquid before the glass substrate 8101 is formed; or the light shielding material 8106 can be added at the same time of hot-melting cross-sections of two glass substrates 8101, and thus the two glass substrates 8101 and the light shielding material 8106 are fused into one whole piece of protective glass.

The above embodiments provide the camera module that is applied in the TOF. The camera module includes the protective glass, the light-emitting component, and the light-receiving component; the protective glass is configured to shield and protect the light-emitting component and the light-receiving component; the protective glass includes the glass substrate and the glass groove defined on the corresponding glass surface of the glass substrate. In this way, according to the embodiments of the present disclosure, one whole piece of protective glass is used as the substrate, and the glass groove is defined on the lower glass surface by heat melting or etching, which not only maintains the one-piece structure of the protective glass, but also ensures the integrity of the appearance, thereby simplifying the structure fixation and facilitating the assembly. Meanwhile, the processing of the glass is simple and the cost is low. In addition, the distance between the light-emitting component and the light-receiving component can be shortened as much as possible, thereby saving more arrangement space for the electronic device. Also, since a direction of a path along which the first reflected light signal propagates after the (N+1)-th reflection is opposite to a direction of a path along which the first reflected light signal propagates after the N-th reflection, the marginal laser reflected inside the protective glass can be prevented from entering the light-receiving component, thereby eliminating the interference.

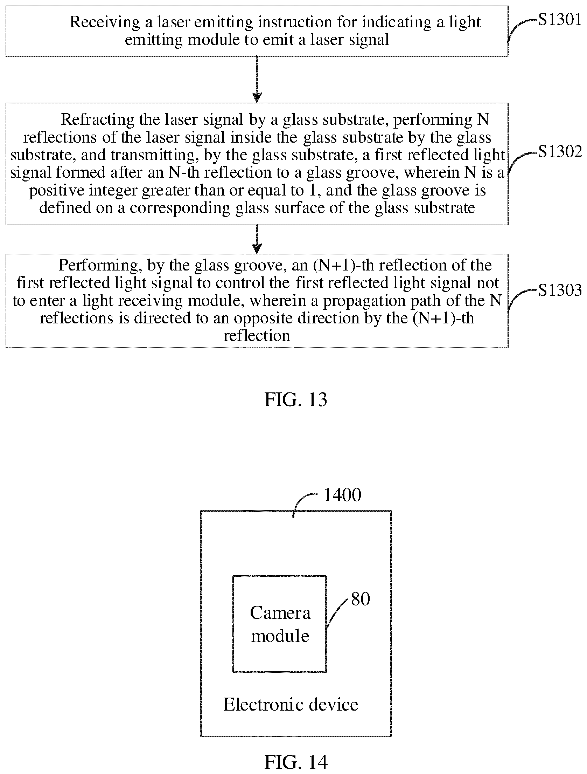

FIG. 13 is a flowchart illustrating a control method according to an embodiment of the present disclosure. Based on the same inventive concept as the above embodiments, in yet another embodiment of the present disclosure, as illustrated in FIG. 13, the method may include the following steps.

In step S 1301, a laser emitting instruction for indicating a light-emitting component to emit a laser signal is received.

It should be noted that the control method is applied in the camera module according to any of the above embodiments. The camera module generally includes the light-emitting component, the light-receiving component, and the protective glass. The camera module and the camera are placed together to photograph the object to be photographed in the external environment. Therefore, when the object to be photographed needs to be photographed, the camera module may receive the laser emitting instruction for indicating the light-emitting component to emit the laser signal. The light-receiving component can calculate the distance to the object to be photographed based on the time difference or the phase shift, so as to obtain the depth information.

In step S1302, the laser signal is refracted by a glass substrate, N reflections of the laser signal inside the glass substrate are performed by the glass substrate, and a first reflected light signal formed after an N-th reflection is transmitted to a glass groove by the glass substrate, where N is a positive integer greater than or equal to 1. The glass groove is made on a glass surface of the glass substrate.

It should be noted that the number of reflections N has a value correlating with the emission angle of the laser signal, the refractive index of air, and the refractive index of glass. In practical applications, when the laser signal is emitted at the maximum emission angle, N is generally equal to 1, which is not specifically in the embodiments of the present disclosure.

It should also be noted that the glass surface includes the upper glass surface and the lower glass surface. The glass groove can be defined on either the lower glass surface or the upper glass surface. However, considering the aesthetics and integrity of the appearance, the glass groove is usually defined on the lower glass surface.

Further, in some embodiments, said refracting the laser signal by the glass substrate, performing the N reflections of the laser signal inside the glass substrate by the glass substrate, and transmitting, by the glass substrate, the first reflected light signal formed after the N-th reflection to the glass groove includes: refracting the laser signal via the lower glass surface based on the glass substrate to form refracted light; and performing the N reflections of the refracted light via the upper glass surface and the lower glass surface, and transmitting the first reflected light signal formed after the N-th reflection to the glass groove.

Further, after the refracted light is formed, the method further includes: refracting the refracted light via the upper glass surface to generate a transmission signal, and transmitting the transmission signal to an external environment; and receiving, by the light-receiving component, a second reflected light signal generated by the transmission signal encountering and being reflected by an object to be photographed in the external environment.

It should be noted that, taking the camera module 80 illustrated in FIG. 8 as an example, after the light-emitting component 110 emits the laser signal, the laser signal is refracted into the glass substrate 8101 via the lower glass surface 8104 to form the refracted light. Due to the limitation of the light transmittance of the glass substrate 8101, most (for example, more than 90%) of the signal in the refracted light can be refracted via the upper glass surface 8103 to generate the transmission signal and transmitted to the external environment. Meanwhile, a small part (for example, less than 10%) of the signal in the refracted light cannot be transmitted via the upper glass surface 8103, and thus the 1-st reflection may be performed via the upper glass surface 8103, the 2-nd reflection may be performed via the lower glass surface 8104, and so on. Through the N reflections inside the glass substrate 8101, the first reflected light signal formed after the N-th reflection may be transmitted to the glass groove 8102. The transmission signal transmitted to the external environment, when encountering the object to be photographed, may be reflected to generate the second reflected light signal. The second reflected light signal, as a useful signal, is allowed to enter the light-receiving component 140. In contrast, the first reflected light signal formed inside the glass substrate 8101 is a non-useful signal. In the embodiments of the present disclosure, the glass groove 8102 can prevent the first reflected light signal from entering the light-receiving component 140, thereby solving the problem of the interference caused by the first reflected light signal.

In step S 1303, an (N+1)-th reflection of the first reflected light signal is performed by the glass groove to control the first reflected light signal not to enter a light-receiving component. A direction of a path along which the first reflected light signal propagates after the (N+1)-th reflection is opposite to a direction of a path along which the first reflected light signal propagates after the N-th reflection.

It should be noted that, the (N+1)-th reflection can be performed via the glass groove 8102, and the direction of the path along which the first reflected light signal propagates after the (N+1)-th reflection is opposite to the direction of the path along which the first reflected light signal propagates after the N-th reflection. For example, in combination with the camera module 80 illustrated in FIG. 8, after the light-emitting component 110 emits the laser signal, the laser signal after the N reflections of the laser signal propagates along a path approaching the light-receiving component 140, i.e., an original path along which the reflected light signal propagates in current solutions. In order to avoid the interference caused by the reflected light signal entering the light-receiving component 140, in the embodiments of the present disclosure, the glass groove 8102 performs the (N+1)-th reflection, and the reflected light signal after the (N+1)-th reflection propagates along a path approaching the light-emitting component 110 (i.e., in a direction opposite to the direction approaching the light-receiving component 140). That is, after the (N+1)-th reflection, the reflected light signal no longer propagates along the original path, such that the reflected light signal will not enter the light-receiving component 140, thereby eliminating the interference.

It should also be noted that, in the embodiments of the present disclosure, one whole piece of protective glass 810 is used as the substrate, and the glass groove is formed by hot-melting or etching the glass substrate. In addition, in order to prevent the light signal reflected inside the protective glass of the marginal laser emitted by the light-emitting component from entering the light-receiving component to cause the interference, the glass groove may include at least one boss in in a shape of triangle.

Further, in some embodiments, said performing, by the glass groove, the (N+1)-th reflection of the first reflected light signal to control the first reflected light signal not to enter the light-receiving component includes: performing, via an inclined surface of the at least one boss, the (N+1)-th reflection of the first reflected light signal to control the first reflected light signal not to enter the light-receiving component.

It should be noted that, in order to make the direction of the path along which the first reflected light signal propagates after the (N+1)-th reflection to be opposite to the direction of the original path, the angle of the inclined surface of the boss shall be controlled. The angle of the inclined surface is related to the emission angle of the laser signal, the refractive index of air, and the refractive index of glass.

For example, taking the calculation principle of FIG. 10 as an example, assuming that the emission angle of the laser signal $\theta1$ is 40°, the refractive index of air n1 is equal to 1, and the refractive index of glass n2 is equal to 1.5, it can be calculated that the refraction angle $\theta2$ is 25.5°, and thus the reflection angle $\theta3$ formed by the 1-st reflection via the upper glass surface is also equal to 25.5°. If it is desired that a path along which the laser signal propagates after the 2-nd reflection is directed to an opposite direction, the design angle of the inclined surface can be calculated in conjunction with the reflection law. Meanwhile, in consideration of the processing error and other factors, the value of the design angle $\theta4$ of the inclined surface may range from 30° to 35° in the embodiments of the present disclosure.

In the embodiments of the present disclosure, in addition to providing the glass groove for avoiding the interference caused by the reflected light signal transmitted to the light-receiving component, the light-absorbing material may be coated on the surface of the glass groove to absorb most of the reflected light signal, which further avoids the interference caused by the reflected light signal transmitted to the light-receiving component. In addition, one layer of light shielding material may be added inside the protective glass, which can also effectively prevent the reflected light signal from being transmitted to the light-receiving component and avoid the interference.

The control method provided by the above embodiments provide is applied in the camera module according to any of the above-mentioned embodiments. In the method, the laser emitting instruction for indicating the light-emitting component to emit the laser signal is received; the laser signal is refracted by the glass substrate, the N reflections of the laser signal inside the glass substrate are performed by the glass substrate, and the first reflected light signal formed after the N-th reflection is transmitted to the glass groove by the glass substrate, where N is a positive integer greater than or equal to 1, and the glass groove is defined on the corresponding glass surface of the glass substrate; the (N+1)-th reflection of the first reflected light signal is performed by the glass groove to control the first reflected light signal not to enter the light-receiving component. The direction of the path along which the first reflected light signal propagates after the N-th reflection is opposite to the direction of the path along which the first reflected light signal propagates after the (N+1)-th reflection. In this way, not only the one-piece structure of the protective glass is maintained, the integrity of the appearance is also ensured, simplifying the structure fixation, and facilitating the assembly. In addition, the distance between the light-emitting component and the light-receiving component can be shortened as much as possible, thereby saving more arrangement space for the electronic device. In the meantime, the marginal laser reflected inside the protective glass can be prevented from entering the light-receiving component to eliminate the interference.

It can be understood that components of the camera module 80 according to the above embodiments can be integrated into one processing unit, or they can be separate physical components, or two or more components may be integrated into one unit. The above integrated unit can be realized in a form of hardware or in a form of software functional module.

When the integrated unit is implemented in the form of software functional unit to be available as a non-standalone product, it can be stored in a computer-readable storage medium. Accordingly, all or part of the technical solutions according to the embodiments, or the part thereof that contributes to the improvement of the prior art, can be embodied in the form of a software product. The computer software product may be stored in a storage medium and may contain instructions to enable a computer device (for example, a personal computer, a server, or a network device, etc.) or a processor to perform all or part of the steps of the method described in the respective embodiments. The storage medium may include various mediums capable of storing program codes, such as Universal Serial Bus flash drive, mobile hard disk, ROM, RAM, magnetic disk, or optical disc.

In still yet another embodiment of the present disclosure, a computer storage medium is provided. The computer storage medium stores a control program. The control program, when executed by a camera module, implements steps of: receiving a laser emitting instruction for indicating a light-emitting component to emit a laser signal; refracting the laser signal by a glass substrate, performing N reflections of the laser signal inside the glass substrate by the glass substrate, and transmitting, by the glass substrate, a first reflected light signal formed after an N-th reflection to a glass groove, where N is a positive integer greater than or equal to 1 and the glass groove is made on a glass surface of the glass substrate; and performing, by the glass groove, an (N+1)-th reflection of the first reflected light signal to control the first reflected light signal not to enter a light-receiving component, where a direction of a path along which the first reflected light signal propagates after the N-th reflection is opposite to a direction of a path along which the first reflected light signal propagates after the (N+1)-th reflection.

Optionally, as another embodiment, the camera module is further configured to, when running the control program, implement steps of the method according to any one of the above embodiments.

In still yet another embodiment of the present disclosure, an electronic device is provided. FIG. 14 is a block diagram illustrating a structure of an electronic device 1400 according to an embodiment of the present disclosure. Referring to FIG. 14, the electronic device 1400 at least includes the camera module 80 according to any one of the above embodiments.

Those skilled in the art should understand that the embodiments of the present disclosure can be provided as a method, a display, or a computer program product. Therefore, the present disclosure may adopt a form of a hardware embodiment, a software embodiment, or an embodiment combining software and hardware. In addition, the present disclosure may adopt a form of a computer program product implemented on one or more computer-usable storage media (including but not limited to disk storage, optical storage, etc.) including computer-usable program codes.

The present disclosure is described with reference to flowcharts and/or block diagrams of the method, the device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing device to generate a machine, such that instructions executed by the processor of the computer or other programmable data processing devices generate an apparatus for implementing functions specified in one or more processes in the flowchart and/or one or more blocks in the block diagram.

These computer program instructions can also be stored in a computer-readable memory that can guide a computer or other programmable data processing devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions may also be loaded on a computer or other programmable data processing devices to enable a series of operation steps to be executed on the computer or other programmable devices for producing computer-implemented processing, such that instructions executed on the computer or other programmable devices provide steps for implementing functions specified in one or more processes in the flowchart and/or one or more blocks in the block diagram.

The methods disclosed in several method embodiments provided by the present disclosure can be combined arbitrarily without conflict to obtain new method embodiments.

The features disclosed in the several product embodiments provided by the present disclosure can be combined arbitrarily without conflict to obtain new product embodiments.

The features disclosed in the several method embodiments or device embodiments provided by the present disclosure can be combined arbitrarily without conflict to obtain new method embodiments or device embodiments.

The above are merely the specific embodiments of the present disclosure, the protect scope of the present disclosure is not limited to these embodiments. Various variants and alternatives can be easily conceived by any of those skilled in the art without departing from the technical scope of the present disclosure. Therefore, these variants and alternatives shall be encompassed by the protect scope of present disclosure as defined by the claims as attached.

Industrial Applicability

According to the embodiments of the present disclosure, the camera module includes the protective glass, the light-emitting component, and the light-receiving component; the protective glass is configured to shield and protect the light-emitting component and the light-receiving component; the protective glass includes a glass substrate and a glass groove made on a glass surface of the glass substrate. In this way, one whole piece of protective glass is used as the substrate, and the glass groove is defined on the glass surface by heat melting or etching, which not only maintains the one-piece structure of the protective glass, but also ensures the integrity of an appearance, thereby simplifying the structure fixation and facilitating assembly. At the same time, the processing of the glass is simple and the cost is low. In addition, the distance between the light-emitting component and the light-receiving component can be shortened as much as possible, thereby saving more arrangement space for the electronic device. Also, the glass groove can prevent the marginal laser reflected inside the protective glass from entering the light-receiving component, thereby eliminating the interference.

**Claims**

1. A camera module, comprising protective glass, a light-emitting component, and a light-receiving component, wherein the protective glass is configured to shield and protect the light-emitting component and the light-receiving component, the protective glass comprises a glass substrate and a glass groove, and the glass groove is made on a glass surface of the glass substrate.

2. The camera module according to claim 1, wherein the glass substrate is configured to: refract a laser signal emitted by the light-emitting component, perform N reflections of the laser signal inside the glass substrate, and transmit a first reflected light signal formed after an N-th reflection to the glass groove, wherein N is a positive integer greater than or equal to 1; and
the glass groove is configured to perform an (N+1)-th reflection of the first reflected light signal to control the first reflected light signal not to enter the light-receiving component, wherein a direction of a path along which the first reflected light signal propagates after the (N+1)-th reflection is opposite to a direction of a path along which the first reflected light signal propagates after the N-th reflection.

3. The camera module according to claim 2, wherein when the laser signal is emitted at a maximum emission angle, N is equal to 1;

the glass substrate is specifically configured to: refract the laser signal at the maximum emission angle, perform a 1-st reflection inside the glass substrate, and transmit the first reflected light signal formed after the 1-st reflection to the glass groove; and
the glass groove is specifically configured to perform a 2-nd reflection of the first reflected light signal to control the first reflected light signal not to enter the light-receiving component.

4. The camera module according to claim 2, wherein the glass surface comprises an upper glass surface and a lower glass surface; and
the glass substrate is configured to: refract the laser signal via the lower glass surface to form refracted light, perform the N reflections of the refracted light via the upper glass surface and the lower glass surface, and transmit the first reflected light signal formed after the N-th reflection to the glass groove.

5. The camera module according to claim 4, wherein the glass substrate is further configured to: refract the refracted light via the upper glass surface to generate a transmission signal, and transmit the transmission signal to an external environment; and
the light-receiving component is specifically configured to receive a second reflected light signal when the second reflected light signal is generated by the transmission signal encountering and being reflected by an object to be photographed in the external environment.

6. The camera module according to claim 1, wherein the glass groove is defined on a lower glass surface corresponding to a non-effective region of the glass substrate, and the non-effective region is a region of the glass substrate located between the light-emitting component and the light-receiving component.

7. The camera module according to claim 1, wherein the protective glass further comprises a light-absorbing material coated on a surface of the glass groove.

8. The camera module according to claim 1, wherein the glass groove is formed by hot-melting or etching the glass substrate.

9. The camera module according to any one of claims 2 to 8, wherein the glass groove comprises at least one boss in a triangular shape; and
the glass groove is further configured to perform the (N+1)-th reflection of the first reflected light signal via an inclined surface of the at least one boss to control the first reflected light signal not to enter the light-receiving component.

10. The camera module according to claim 9, wherein a design angle corresponding to the inclined surface of the at least one boss is determined based on an emission angle of the laser signal, a refractive index of air, and a refractive index of glass.

11. The camera module according to claim 1, wherein the protective glass further comprises a light shielding material located in a non-effective region of the glass substrate.

12. The camera module according to claim 11, wherein the light shielding material is added to the glass substrate by a thermal processing of the glass substrate.

13. A control method, applied in a camera module, the method comprising:

receiving a laser emitting instruction for indicating a light-emitting component to emit a laser signal;
refracting the laser signal by a glass substrate, performing N reflections of the laser signal inside the glass substrate by the glass substrate, and transmitting, by the glass substrate, a first reflected light signal formed after an N-th reflection to a glass groove, wherein N is greater a positive integer greater than or equal to 1, and the glass groove is made on a glass surface of the glass substrate; and
performing, by the glass groove, an (N+1)-th reflection of the first reflected light signal to control the first reflected light signal not to enter a light-receiving component, wherein a direction of a path along which the first reflected light signal propagates after the (N+1)-th reflection is opposite to a direction of a path along which the first reflected light signal propagates after the N-th reflection.

14. The method according to claim 13, wherein the glass surface comprises an upper glass surface and a lower glass surface, and said refracting the laser signal by the glass substrate, performing the N reflections of the laser signal inside the glass substrate by the glass substrate, and transmitting, by the glass substrate, the first reflected light signal formed after the N-th reflection to the glass groove comprises:

refracting the laser signal via the lower glass surface based on the glass substrate to form refracted light; and
performing the N reflections of the refracted light via the upper glass surface and the lower glass surface, and transmitting the first reflected light signal formed after the N-th reflection to the glass groove.

15. The method according to claim 14, further comprising, after the refracted light is formed:

refracting the refracted light via the upper glass surface to generate a transmission signal, and transmitting the transmission signal to an external environment; and
receiving, by the light-receiving component, a second reflected light signal generated by the transmission signal encountering and being reflected by an object to be photographed in the external environment.

16. The method according to claim 13, wherein the glass groove comprises at least one boss in a triangular shape, and said performing, by the glass groove, the (N+1)-th reflection of the first reflected light signal to control the first reflected light signal not to enter the light-receiving component comprises:
performing, via an inclined surface of the at least one boss, the (N+1)-th reflection of the first reflected light signal to control the first reflected light signal not to enter the light-receiving component.

17. A computer storage medium, having a control program stored thereon, wherein the control program, when executed by a camera module, implements steps of the method according to any one of claims 13 to 16.

18. An electronic device, at least comprising the camera module according to any one of claims 1 to 12.

FIG. 1

(Prior Art)

FIG. 2

(Prior Art)

FIG. 3

(Prior Art)

T0

θ2

3101

310

3102

θ1

110

Spacing

140

Light-emitting
component

Light-receiving
module

FIG. 4

(Prior Art)

FIG. 5A

(Prior Art)

FIG. 5B

(Prior Art)

610          630          620

Laser signal→

Light-emitting
component          110

Light-receiving
component          140

FIG. 6

(Prior Art)

710

Laser signal→

Light-emitting
component          110

Light-receiving
component          140

FIG. 7

(Prior Art)

80

8103

810

8101

8102

8104

Laser signal→

110

140

Light-emitting
component

Light-receiving
component

FIG. 8

80

810

S4  S2  S3

8102

8103

8101

L1

8104

S1

Laser signal

L1

110

140

Light-emitting
component

Light-receiving
component

FIG. 9

FIG. 10

FIG. 11

FIG. 12

Receiving a laser emitting instruction for indicating a light emitting module to emit a laser signal ⟋S1301

Refracting the laser signal by a glass substrate, performing N reflections of the laser signal inside the glass substrate by the glass substrate, and transmitting, by the glass substrate, a first reflected light signal formed after an N-th reflection to a glass groove, wherein N is a positive integer greater than or equal to 1, and the glass groove is defined on a corresponding glass surface of the glass substrate ⟋S1302

Performing, by the glass groove, an (N+1)-th reflection of the first reflected light signal to control the first reflected light signal not to enter a light receiving module, wherein a propagation path of the N reflections is directed to an opposite direction by the (N+1)-th reflection ⟋S1303

FIG. 13

⟋ 1400

Camera module ⟋80

Electronic device

FIG. 14

## INTERNATIONAL SEARCH REPORT

International application No.

**PCT/CN2019/089364**

**A.    CLASSIFICATION OF SUBJECT MATTER**

G01S 7/481(2006.01)i

According to International Patent Classification (IPC) or to both national classification and IPC

**B.    FIELDS SEARCHED**

Minimum documentation searched (classification system followed by classification symbols)

G01S; G02B

Documentation searched other than minimum documentation to the extent that such documents are included in the fields searched

Electronic data base consulted during the international search (name of data base and, where practicable, search terms used)

CNPAT; CNKI; WPI; EPODOC: 摄像, 透镜, 玻璃, 发送, 接收, 光, 反射, 沟, 槽, 凸, 凹, 测距, 飞行时间, camera, lens, glass, transmit+, receiv+, reflect, notch, groove, slot

**C.    DOCUMENTS CONSIDERED TO BE RELEVANT**

| Category* | Citation of document, with indication, where appropriate, of the relevant passages | Relevant to claim No. |
|---|---|---|
| X | CN 106872961 A (BENEWAKE (BEIJING) CO., LTD.) 20 June 2017 (2017-06-20) description, paragraphs [0030]-[0043] | 1, 8, 18 |
| A | CN 203812216 U (BEIJING IRTOUCH SYSTEMS CO., LTD.) 03 September 2014 (2014-09-03) entire document | 1-18 |
| A | US 2015055116 A1 (SINTAI OPTICALSHENZHEN CO., LTD. et al.) 26 February 2015 (2015-02-26) entire document | 1-18 |

☐ Further documents are listed in the continuation of Box C.    ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **16 February 2020** | **26 February 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/089364**

| Patent document cited in search report | | | Publication date (day/month/year) | Patent family member(s) | | | Publication date (day/month/year) |
|---|---|---|---|---|---|---|---|
| CN | 106872961 | A | 20 June 2017 | CN | 110531342 | A | 03 December 2019 |
| | | | | WO | 2018184374 | A1 | 11 October 2018 |
| | | | | US | 2019004152 | A1 | 03 January 2019 |
| CN | 203812216 | U | 03 September 2014 | | None | | |
| US | 2015055116 | A1 | 26 February 2015 | TW | 201508333 | A | 01 March 2015 |
| | | | | TW | 201508334 | A | 01 March 2015 |

Form PCT/ISA/210 (patent family annex) (January 2015)